# EUROPEAN PATENT SPECIFICATION

(11) **EP 1 753 939 B1**
(45) Date of publication and mention of the grant of the patent: **05.08.2009**
(21) Application number: 05758401.3
(22) Date of filing: 03.06.2005
(51) Int. Cl.: F01D 21/02, F02C 9/28, F02C 9/46

(54) **OVERSPEED LIMITER FOR TURBOSHAFT ENGINES**
DREHZAHLBEGRENZER FÜR TURBOMOTOREN
LIMITEUR DE SURVITESSE POUR TURBOMOTEURS

(30) Priority: 03.06.2004 US 576779 P
(43) Date of publication of application: 21.02.2007
(73) Proprietor: Goodrich Pump & Engine Control Systems, Inc., West Hartford, CT 06133-0651 (US)
(72) Inventor: ROGERS, David M., Avon, CT 06001 (US); ZAGRANSKI, Raymond D., Somers, CT 06071 (US); MANNARINO, Giovanni, Town Of Mount Royal, Quebec (CA); REID, Matthew, Robert, St. Bruno, Quebec, J3V4P2 (CA)
(74) Representative: Liska, Horst
(86) International application number: PCT/US2005/019699
(87) International publication number: WO 2005/119012

(56) References cited:
- EP-A- 1 327 751
- DE-A1- 1 751 821
- GB-A- 2 087 978
- US-A- 4 045 955
- US-A- 4 454 754
- US-A- 4 578 945

## Description

### BACKGROUND OF THE INVENTION

### 1. Field of the Invention

The subject invention is directed to control systems for gas turbine engines, and more particularly, to power turbine overspeed limiters for turboshaft engines used in helicopters.

### 2. Background of the Related Art

Overspeed limiters for gas turbine engines are known in the prior art. The function of an overspeed limiter is to prevent the occurrence of excessive turbine speeds by limiting fuel flow to the engine. Examples of prior art overspeed limiters are described in U.S. Patent No. 4,302,931 to White et al. and U.S. Patent No. 4578,945 to Peck et al., the disclosures of which are herein incorporated by reference in their entireties.

Turboshaft engines installed on helicopters require a unique power turbine overspeed limiter. It needs to protect the engine against a loss of load and potential power turbine overspeed, and preclude false overspeed limiter trips. False limiter trips significantly reduce engine power, and can occur when a pilot is flying the helicopter aggressively.

In the past, these requirements have been addressed by providing overspeed limiters that do not completely shutdown the engine when an overspeed condition is detected, but instead trip to a minimum fuel flow condition. Other prior art systems shutdown the engine when an overspeed condition is detected, and then restart the engine using an auto-relight feature.

In modem low inertia gas turbines, minimum fuel flow systems are not capable of containing loss-of-load power turbine overspeeds at high altitude, because the horsepower requirements are too significant. Auto-relight systems are not guaranteed to restart an engine under all operating conditions, especially when the primary engine control system has failed and the engine is operating with a simple manual backup control.

Accordingly, there is a need in the art for an overspeed limiter for a turboshaft engine that is capable of effectively handling power turbine overspeeds at both high and low altitude.

From GB 2 087 978 A a fuel control system for a gas turbine engine is known comprising a main controller and an overspeed limiter which provides a fail-safe should failure of the main controller lead to an otherwise uncontrolled increase in fuel flow to the engine. In order to allow the limiter to reduce a maximum fuel flow to that required for safe operation at high altitude, while avoiding the possibility of a downward failure of the limiter at low altitude shutting the engine down, an input proportional to ambient pressure is used to control limiter operation. The ambient pressure input moves a three-dimensional cam a cam follower of which operates a fuel valve.
From US patent 4 045 955 it is known to control the flow of fuel to a stationary gas turbine plant driving an electric generator. The control system comprises an overspeed limiter which detects an overspeed condition by first and second control logic paths. The first path includes derivative means and non-derivative means and the second path includes non-derivative means.
DE 1 751 821 A shows an overspeed control system for a stationary steam turbo shaft engine driving an electric generator. A control system comprises a derivative path and a non-derivative path.
From US patent 4 454 754 a control system for a gas turbine engine is known which provides a warning signal in case of flame-out or output drive train breakage. To detect engine flame-out an unacceptably fast gas turbine deceleration rate is determined while output shaft failure is determined by sensing a mismatch between the engine output shaft speed and load speed.

### SUMMARY OF THE INVENTION

A control system according to the invention is characterized by the features of claim 1 or claim 12. A method according to the invention for limiting turbo shaft engine overspeed is characterized by the features of claim 21.
The subject invention is directed to a control system for a turboshaft engine utilized in a helicopter which includes means for providing minimum fuel flow to the engine when an overspeed condition is detected at a relatively low altitude (e.g., below 3048 m (10,000 feet)), and means for shutting off fuel flow to the engine, and thus shutting down the engine, when an overspeed, loss of load condition is detected at a relatively high altitude (e.g. above 3048 m (10,000 feet)), provided that the overspeed, loss of load condition is detected along two different engine speed signal paths, including a derivative path and a non-derivative path.

The subject invention is also directed to a control system for a turboshaft engine which provides a desired minimum fuel flow to the engine when an overspeed condition is detected and when the engine is operating in a first operating range and shuts off fuel flow to the engine when an overspeed condition is detected and the engine is operating in a second operating range. It is presently envisioned that an overspeed condition is detected based on at least one of, for example, a power turbine speed signal, a gas generator speed signal and main rotor speed signal.

Preferably, in the first operating range the engine is operating at a relatively low altitude and in the second operating range the engine is operating at a relatively high altitude. In a representative system, the relatively low altitude includes 0 to 3048 m (10,000 feet) above sea level and the relatively high altitude exceeds 3048 m (10,000 feet) above sea level, for example.

In a preferred embodiment, an overspeed condition is detected along two different control logic paths, a first logic path which includes derivative and non-derivative control logic and a second logic path which includes non-derivative logic (e.g. proportional logic).

It is envisioned that the control system further includes a hardware latch having reset logic associated therewith. Additionally, the control system can include software test interfaces for testing the performance of the control system.

In a representative embodiment, a minimum fuel flow is provided to the engine when an overspeed condition is detected through a first solenoid valve and the fuel flow to the engine is shut off when an overspeed condition is detected by a second solenoid valve.

In preferred embodiments the control system is a dual channel system having an interchannel communication means for ensuring that a fault in one channel of the system will not shut down the control system or impact the systems ability to limit engine overspeed.

The present invention is also directed to a control system for a turboshaft engine which includes a mechanism for shutting off fuel flow to the engine when an overspeed condition is detected, wherein the overspeed condition is detected by first and second control logic paths. It is envisioned that the first control logic path includes a derivative path and a non-derivative path and the second control logic path includes a non-derivative path. Preferably, the control system includes a device for disabling the fuel shut-off mechanism when the engine is operating below an altitude of 10,000 feet.

The present disclosure is also directed to a control system for a turboshaft engine which includes a mechanism for providing a minimum fuel flow to the engine when an overspeed condition is detected in a first operating range; and a mechanism for shutting off fuel flow to the engine when an overspeed condition is detected in a second operating range. It is preferred that the overspeed condition is detected along two different engine speed signal paths, including a derivative path and a non-derivative path.

Preferably, in the first operating range the engine is operating at a relatively low altitude and in the second operating range the engine is operating at a relatively high altitude. In a representative system, the relatively low altitude includes 0 to 3048 m (10,000 feet) above sea level and the relatively high altitude exceeds 3048 m (10,000 feet) above sea level, for example.

In a preferred embodiment, an overspeed condition is detected along two different control logic paths, a first logic path which includes derivative and non-derivative control logic and a second logic path which includes non-derivative logic (e.g. proportional logic).

It is envisioned that the control system further includes a hardware latch having reset logic associated therewith. Additionally, the control system can include software test interfaces for testing the performance of the control system.

In a representative embodiment, a minimum fuel flow is provided to the engine when an overspeed condition is detected through a first solenoid valve and the fuel flow to the engine is shut off when an overspeed condition is detected by a second solenoid valve.

In preferred embodiments the control system is a dual channel system having an interchannel communication means for ensuring that a fault in one channel of the system will not shut down the control system or impact the systems ability to limit engine overspeed.

The present disclosure is also directed to a method for limiting turboshaft engine overspeed that includes measuring at least one engine speed parameter; sensing the altitude at which the engine is operating and determining whether an overspeed condition exists based on the measured speed parameter. The disclosed method uses a control system which includes a first logic path that has derivative and non-derivative control logic and a second logic path that has non-derivative logic. The inventive method also includes the steps of providing a desired minimum fuel flow to the engine when an overspeed condition is detected by the engine control system when the engine is operating in a first altitude range; and shutting off fuel flow to the engine when an overspeed condition is detected by the engine control system and the engine is operating in a second operating range.

These and other aspects of the subject invention will become more readily apparent to those having ordinary skill in the art from the following detailed description of the invention taken in conjunction with the drawings.

### BRIEEF DESCRIPTION OF THE DRAWINGS

So that those having ordinary skill in the art will better understand how to make and use the overspeed limiter system of the subject invention, embodiments thereof will be described below with reference to the drawings wherein:

Fig. 1 is a schematic diagram of a fuel metering system for a turboshaft engine that employs a preferred embodiment of the overspeed limiter of the subject invention;

Fig. 2 is a schematic diagram showing representative dual channel hardware voting logic, which will shut down the engine upon detecting an overspeed condition;

Fig. 2a is a cross-sectional view of a portion of the shaft for the power turbine having three speed probes positioned adjacent thereto for detecting a shaft speed signal;

Fig. 3 is a schematic diagram showing the engine shut down logic path of Fig. 2, with a hardware latch;

Fig. 4 is a schematic diagram showing the engine shut down logic path and hardware latch of Fig. 3, with software test interfaces;

Fig. 5 is a schematic diagram showing the engine shutdown logic path with hardware latch as shown in Fig. 3, combined with a minimum fuel flow logic path;

Fig. 6 is a schematic diagram showing the combined minimum fuel flow logic path and engine shutdown logic path of Fig. 5, with cross-engine inhibit features; and

Fig. 7 is a schematic diagram of an alternate embodiment of the two analog overspeed limiter lanes of protection, which include a more precise test of the derivative path in Lane 1, as compared to the software test interfaces of Fig. 4.

### DETAILED DESCRIPTION OF THE PREFERRED EMBODIMENTS

The subject invention overcomes the disadvantages of prior art overspeed limiters used on turboshaft engines in helicopters by preferably providing both a minimum flow overspeed system for low altitude operation (e.g., below 3048 m (10,000 feet)) and a fuel shutoff system for high altitude (e.g., above 3048 m (10,000 feet)) overspeed/loss-of-load conditions.

The system of the subject invention is uniquely implemented in analog hardware and in the software of the primary engine control unit (ECU) to satisfy all certification standards for: a) the probability of loss of overspeed protection; b) the probability of a false overspeed trip; and c) the probability of a single failure causing an engine overspeed condition and loss of overspeed protection at the same time.

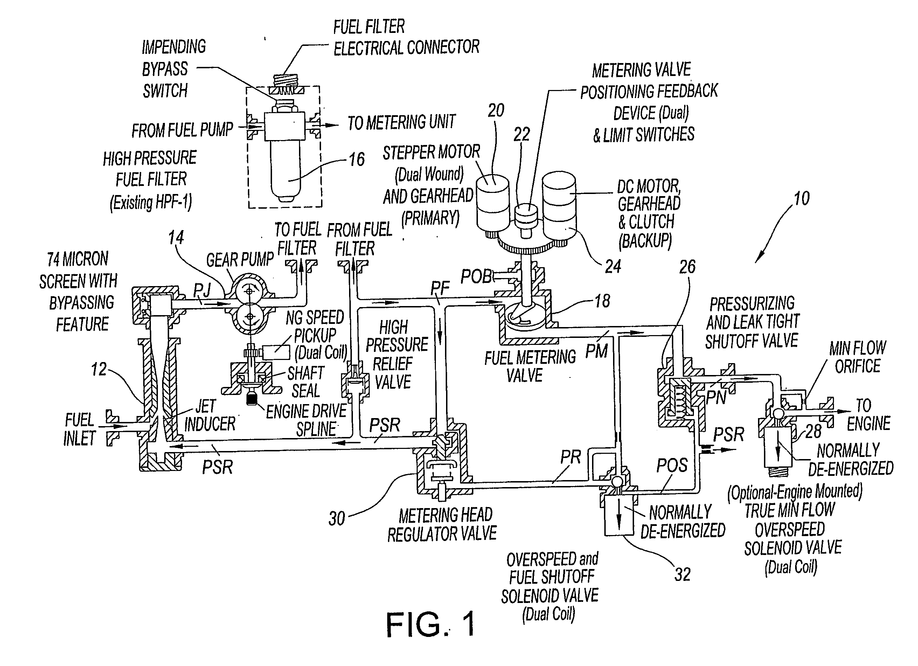

Referring now to the drawings, wherein like reference numerals identify similar aspects or features of the subject invention, there is illustrated in Fig. 1 a representative fuel metering system 10 for a turboshaft engine that employs the overspeed limiter of the subject invention. As illustrated in Fig. 1, the fuel metering system 10 includes, among other things, a venturi-type jet inducer 12, which delivers fuel under pressure to a gear pump 14. Gear pump 14 communicates with a highpressure fuel filter 16. Fuel flows from filter 16 to a fuel metering valve 18 operated by a stepper motor 20 with associated primary gearhead. A feedback device 22 is associated with the metering valve for monitoring the position of the metering valve 18. Feedback device 22 has associated limit switches. Also associated with the metering valve 18 is a combined DC motor, gearhead and clutch set 24, which serves as a backup to the stepper motor 20.

A pressurizing and leak tight shutoff valve 26 is in fluid communication with fuel metering valve 18. It delivers fuel to the engine by way of a dual coil true minimum flow overspeed solenoid valve 28, which is normally de-energized. A fuel regulator valve 30 also receives filtered fuel from filter 16. Regulator valve 30 communicates with the jet inducer 12 and also communicates with a dual coil overspeed and fuel shutoff solenoid valve 32 that is normally de-energized. Regulator valve 30 is also in fluid communication with fuel metering valve 18. The fuel shutoff solenoid valve 32 is also in fluid communication with the pressurizing shutoff valve 26. As explained in below, the overspeed limiter system of the subject invention controls the operation of the two dual coil solenoid valves 28 and 32. During normal operating conditions, both solenoid valves 28 and 32 are de-energized.

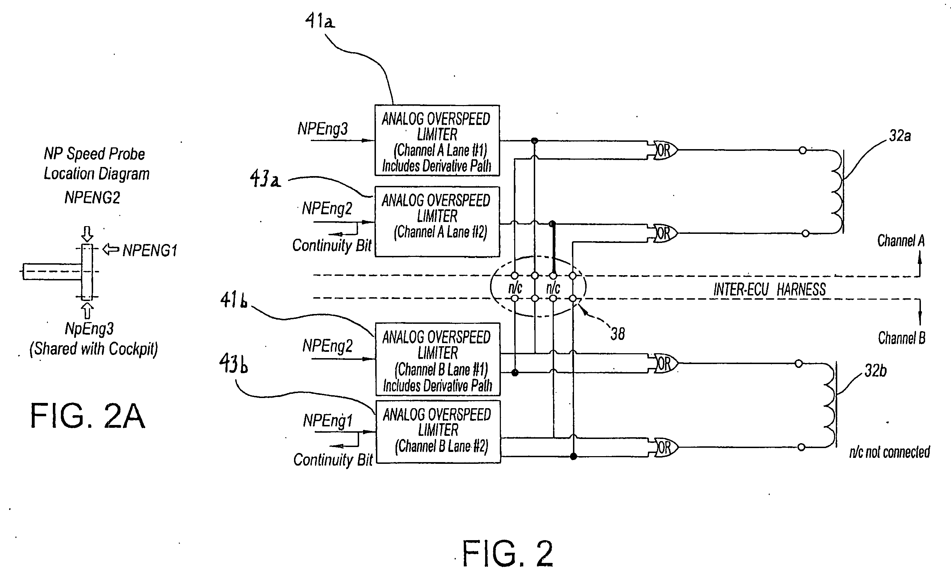

Referring now to Fig. 2, there is presented a schematic diagram showing the dual channel hardware voting logic which will shutdown the engine upon detecting an overspeed condition, provided that the overspeed condition is detected along two NP engine signal paths, a first path including a derivative signal path and a second path including a non-derivative engine signal path. In a preferred embodiment, the first path includes both derivative and proportional control logic while the second path includes proportional logic, but does not include derivative logic.

As illustrated, two NP engine signals (i.e., power turbine speed signals) are brought into each of the two engine control unit (ECU) channels (Channel A and Channel B). As shown, two Analog Overspeed Limiter Lanes of protection are provided for each channel. The logic for these lanes of overspeed protection have been identified by reference numerals 41a/43a for Channel A and reference numerals 41b/43b for Channel B. Each ECU channel includes a respective shutdown coil (32a, 32b) of fuel shutoff solenoid 32.

Channel A, Analog Overspeed Limiter Lane 1, identified by reference number 41 a, includes a derivative path and it receives the engine speed signal NPeng3. Channel A, Analog Overspeed Limiter Lane 2, identified by reference number 43a, includes a non-derivative path (e.g. proportional logic) and it receives the engine speed signal NPEng2. Channel B, Analog Overspeed Limiter Lane 1, identified by reference number 41b, includes a derivative path and it receives the engine speed signal NPEng2. Channel B, Analog Overspeed Limiter Lane 2, identified by reference number 43b, includes a non-derivative path (e.g., proportional logic) and it receives the engine speed signal NPEng1. Fig. 2a shows the NP speed probe location diagram for engine speed signals NPEng1, NPEng2 and NPEng3, where NPEng3 is shared with the cockpit.

The hardware voting scheme of Fig. 2 ensures that: a) no single electrical protection system fault will result in a false overspeed trip; and b) no single electrical protection system fault will result in a loss of overspeed protection. The hardware voting scheme depicted in Fig. 2 requires four output pins 38 for interchannel communication. These include two discrete inputs and two discrete outputs. The voting scheme will shutdown the engine under the following votes:

NPEng1 +NPEng2 = derivative path + non-derivative path

NPEng2 + NPEng3 = derivative path + non-derivative path

NPEng1 + NPEng3 = derivative path + non-derivative path

This voting scheme ensures that under all valid votes, one derivative and one non-derivative engine speed signal path lane detects an overspeed condition. It should be noted that the disclosed control system provides high side and low side drivers to each of solenoids 32a and 32b. As shown, Lane #1 of Channels A and B control the high side drivers for solenoids 32a and 32b and Lane #2 of Channels A and B controls the low side drivers for each of these solenoids.

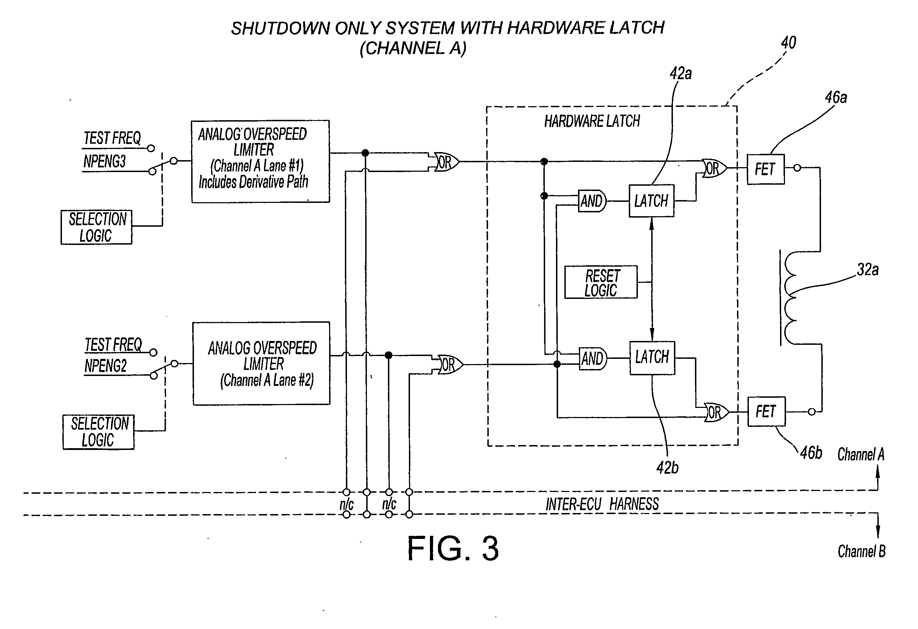

Referring Fig. 3, there is illustrated a schematic diagram showing the engine shut down logic path of Fig. 2, with a hardware latch 40 interposed between the two Analog Overspeed Limiter Lanes of Channel A and the shutdown coil 32a of fuel shutoff solenoid 32. The hardware latch includes two latches 42a, 42b in communication with reset logic and respective field effect transducers (FET) 46a, 46b, which communicate with the shutdown coil 32a of solenoid valve 32. Channel B has an identical hardware latch configuration.

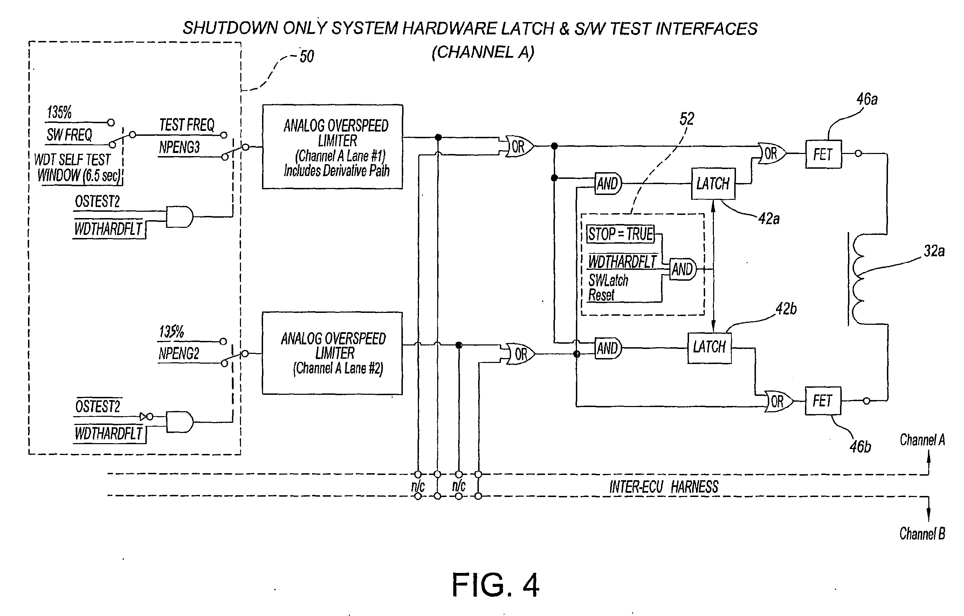

Referring to Fig. 4, there is illustrated a schematic diagram showing the engine shut down logic path and hardware latch of Fig. 3, with software test interfaces 50 and 52. Interface 50 is associated with input side of the two Analog Overspeed Limiter Lanes of Channel A. Interface 50, for Lane 1 includes a 6.5 second self test window. Software test interface 52 is associated with the latch reset logic. Channel B has an identical software interface associated therewith.

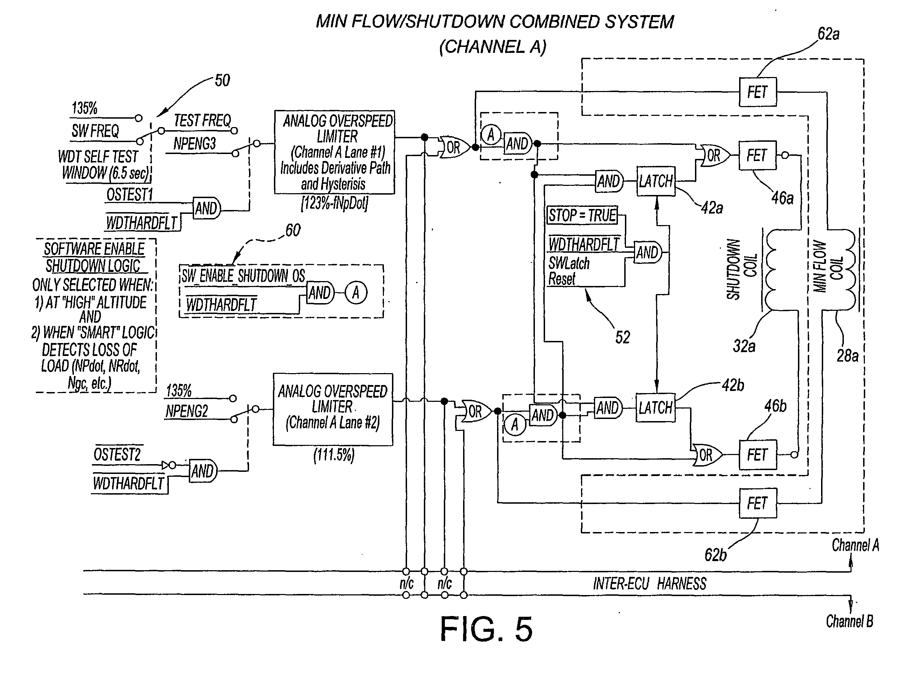

Referring to Fig. 5, there is illustrated a schematic diagram showing the engine shutdown logic path with hardware latch as shown in Fig. 3, combined with a minimum flow logic path, for the two Analog Overspeed Limiter Lanes of Channel A. In this configuration, Lane 1 includes a derivative path and hysterisis. The combined system of Fig. 5 includes software enable shutdown logic 60 which is selected only when: 1) at high altitude; and 2) the logic detects a loss of load signal (Npdot, Nrdot, Ngc, etc.). In this configuration, the software enable shutdown logic 60 communicates with the shutdown coil 32a of fuel shutoff solenoid 32, while the two Analog Overspeed Limiter Lanes communicate with the shutdown coil 32a and the minimum flow coil 28a of the true minimum flow overspeed solenoid valve 28 through FET's 62a, 62b. Channel B has identical software enable shutdown logic. It should be noted that the disclosed control system provides high side and low side drivers to each of solenoids 28a and 28b. As shown, Lane #1 of Channels A and B control the high side drivers for solenoids 28a and 28b and Lane #2 of Channels A and B controls the low side drivers for each of these solenoids.

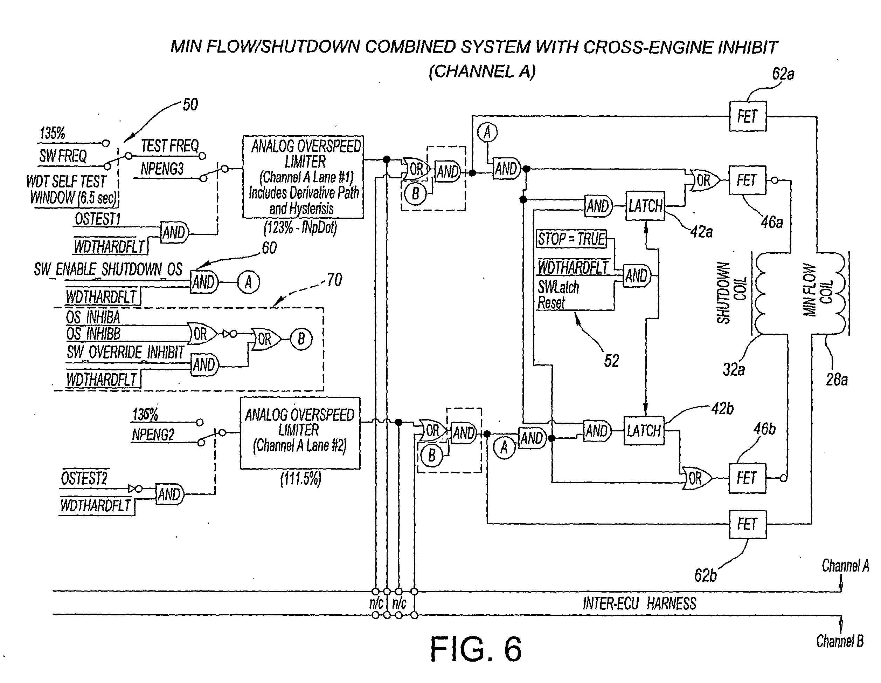

Referring now to Fig. 6, there is illustrated a schematic diagram showing the combined minimum fuel flow logic path and engine shutdown logic path of Fig. 5, with cross-engine inhibit features, for the two Analog Overspeed Limiter Lanes of Channel A. In this configuration, the software enable shutdown logic communicates with the shutdown coil 32a of solenoid valve 32, as in Fig. 5. The cross-engine inhibit logic 70 runs through nodes that are upstream from the input node for the software enable shutdown logic 60, and it communicates with the shutdown coil 32a of solenoid 32 and the minimum flow coil 28a of solenoid 28. The cross-engine inhibit logic 70 serves to detect when either the shutdown coil 32a or minimum flow coil 28a has been energized, and provides a corresponding discrete output signal to each channel of the opposite engine's ECU. Channel B has an identical cross-engine inhibit logic arrangement.

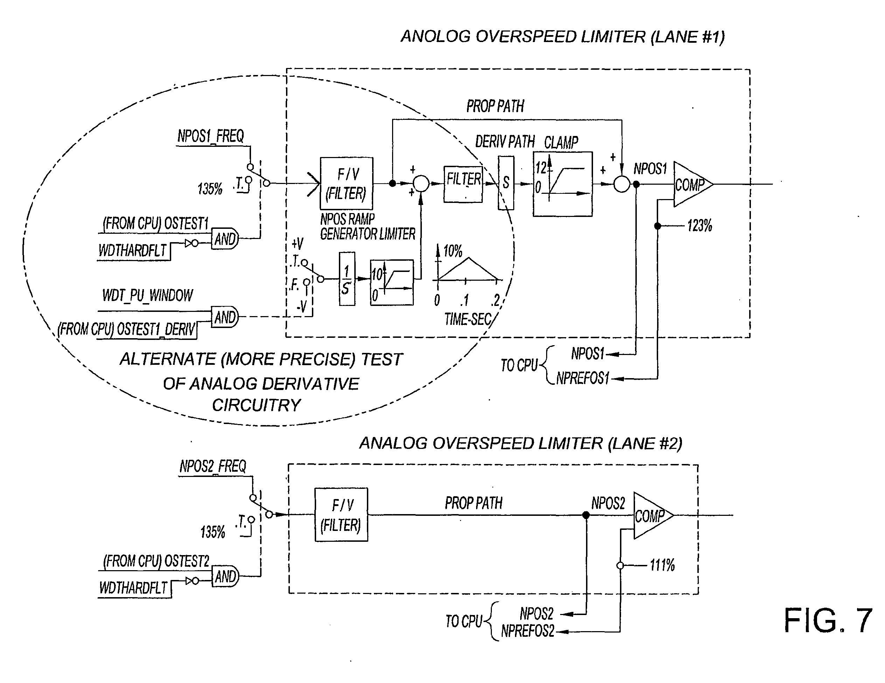

Referring to Fig. 7, there is illustrated a schematic diagram of an alternate embodiment of the two Analog Overspeed Limiter Lanes of Channel A. This circuit provides a more precise test of the derivative path in Lane 1, as compared to the software test interfaces of Fig. 4. Channel B has an identical arrangement.

Although the subject invention has been described with respect to preferred embodiments, those skilled in the art will readily appreciate that changes and modifications may be made thereto without departing from the spirit and scope of the subject invention as defined by the appended claims.

## Claims

1. A control system for a turboshaft engine comprising:
a) means (28, 41 a, b, 43a, b) for providing a desired minimum fuel flow to the engine when an overspeed condition is detected and when the engine is operating in a first operating range; and.
b) means (32, 41a, b, 43a, b) for shutting off fuel flow to the engine when an overspeed condition is detected and the engine is operating in a second operating range.

2. A control system as recited in claim 1, wherein in the first operating range the engine is operating at a relatively low altitude and in the second operating range the engine is operating at a relatively high altitude.

3. A control system as recited in claim 2, wherein the relatively low altitude includes 0 to 3048 m above sea level and the relatively high altitude exceeds 3048 m above sea level.

4. A control system as recited in claim 1, wherein an overspeed condition is detected along two different control logic paths, a first logic path (41 a, 43a) which includes derivative and non-derivative control logic and a second logic path (43b) which includes non-derivative logic.

5. A control system as recited in claim 4, wherein the non-derivative logic includes proportional logic.

6. A control system as recited in claim 1, further comprising a hardware latch (40) having reset logic associated therewith.

7. A control system as recited in claim 1, further comprising software test interfaces (50, 52) for testing the performance of the control system.

8. A control system as recited in claim 1, wherein the means (28, 41 a, b, 43a, b) for providing a desired minimum fuel flow to the engine when an overspeed condition is detected includes a first solenoid valve (28) and the means (32, 41 a, b, 43a, b) for shutting off fuel flow to the engine when an overspeed condition is detected includes a second solenoid valve (32).

9. A control system as recited in claim 1, wherein an overspeed condition is detected based on at least one of a power turbine speed signal, a gas generator speed signal and main rotor speed signal.

10. A control system as recited in claim 1, wherein the system is a dual channel system having an interchannel communication means for ensuring that a fault in one channel of the system will not shut down the control system.

11. A control system as recited in claim 1, further comprising means for disabling the means for shutting off fuel flow to the engine when an overspeed condition is detected when the engine is operating below an altitude of 3048 m.

12. A control system for a turboshaft engine comprising:
a) means (28, 41 a, b, 43a, b) for proving a minimum fuel flow to the engine when an overspeed condition is detected in a first operating range; and
b) means (32, 41 a, b, 43a, b) for shutting off fuel flow to the engine when an overspeed condition is detected in a second operating range, provided that the overspeed condition is detected along two different engine speed signal paths (41 a, b, 43a, b), including a derivative path and a non-derivative path.

13. A control system as recited in claim 12, wherein in the first operating range the engine is operating at a relatively low altitude and in the second operating range the engine is operating at a relatively high altitude.

14. A control system as recited in claim 13, wherein the relatively low altitude includes 0 to 3048 m above sea level and the relatively high altitude exceeds 3048 m above sea level.

15. A control system as recited in claim 12, wherein the derivative path (41 a, 43a) include derivative and proportional control logic and the non-derivative path (43b) includes proportional logic.

16. A control system as recited in claim 12, further comprising a hardware latch (40) having reset logic associated therewith.

17. A control system as recited in claim 12, further comprising software test interfaces (50, 52) for testing the performance of the control system.

18. A control system as recited in claim 12, wherein the means (28, 41a, b, 43a, b) for providing a desired minimum fuel flow to the engine when an overspeed condition is detected includes a first solenoid valve (28) and the means (32, 41 a, b, 43a, b) for shutting off fuel flow to the engine when an overspeed condition is detected includes a second solenoid valve (32).

19. A control system as recited in claim 12, wherein an overspeed condition is detected based on at least one of a power turbine speed signal, a gas generator speed signal and main rotor speed signal.

20. A control system as recited in claim 12, wherein the system is a dual channel system having an interchannel communication means for ensuring that a fault in one channel of the system will not shut down the control system.

21. A method for limiting turboshaft engine overspeed comprising the steps of:
a) measuring at least one engine speed parameter;
b) sensing the altitude at which the engine is operating;
c) determining whether an overspeed condition exists based on the measured speed parameter using a control system which includes a first logic path (41 a, 43a) having derivative and non-derivative control logic and a second logic path (43b) having non-derivative logic;
d) providing a desired minimum fuel flow to the engine when an overspeed condition is detected by the engine control system when the engine is operating in a first altitude range; and
e) shutting off fuel flow to the engine when an overspeed condition is detected by the engine control system and the engine is operating in a second operating range.

## Patentansprüche

1. Steuersystem für einen Turbowellenmotor, umfassend:
a) Mittel (28, 41 a, b, 43a, b) zum Liefern eines gewünschten minimalen Kraftstoffflusses zu dem Motor, wenn ein Überdrehzahlzustand detektiert wird und wenn der Motor in einem ersten Betriebsbereich läuft; und
b) Mittel (32, 41 a, b, 43a, b) zum Abschalten des Kraftstoffflusses zu dem Motor, wenn ein Überdrehzahlzustand detektiert wird und der Motor in einem zweiten Betriebsbereich läuft.

2. Steuersystem nach Anspruch 1, worin im ersten Betriebsbereich der Motor auf relativ geringer Höhe läuft und im zweiten Betriebsbereich der Motor auf relativ großer Höhe läuft.

3. Steuersystem nach Anspruch 2, worin die relativ geringe Höhe 0 bis 3048m über dem Meeresspiegel enthält und die relativ große Höhe 3048m über dem Meeresspiegel überschreitet.

4. Steuersystem nach Anspruch 1, worin ein Überdrehzahlzustand entlang zwei unterschiedlichen Steuerlogikwegen detektiert wird, einem ersten Logikweg (41 a, 43a), der eine derivative und nicht-derivative Steuerlogik enthält, und einem zweiten Logikweg (43b), der nicht-derivative Logik enthält.

5. Steuersystem nach Anspruch 4, worin die nicht-derivative Logik proportionale Logik enthält.

6. Steuersystem nach Anspruch 1, das ferner einen Hardwaresignallspeicher (40) aufweist, dem eine Rücksetzlogik zugeordnet ist.

7. Steuersystem nach Anspruch 1, das ferner Software-Testschnittstellen (50, 52) aufweist, um die Leistungsfähigkeit des Steuersystems zu testen.

8. Steuersystem nach Anspruch 1, worin das Mittel (28, 41 a, b, 43a, b) zu Liefern eines gewünschten minimalen Kraftstoffflusses zu dem Motor, wenn ein Überdrehzahlzustand detektiert wird, ein erstes Magnetventil (28) enthält, und das Mittel (32, 41 a, b, 43a, b) zum Abschalten des Kraftstoffflusses zu dem Motor, wenn ein Überdrehzahlzustand erfasst wird, ein zweites Magnetventil (42) enthält.

9. Steuersystem nach Anspruch 1, worin ein Überdrehzahlzustand basierend auf einem Antriebsturbinendrehzahlsignal und/oder einem Gasgeneratordrehzahlsignal und/oder einem Hauptrotordrehzahlsignal detektiert wird.

10. Steuersystem nach Anspruch 1, worin das System ein Doppelkanalsystem mit einem Zwischenkanalkommunikationsmittel ist, um sicherzustellen, dass ein Fehler in einem Kanal des Systems das Steuersystem nicht abschaltet.

11. Steuersystem nach Anspruch 1, das ferner ein Mittel aufweist, um das Mittel zum Abschalten des Kraftstoffflusses zu dem Motor, wenn ein Überdrehzahlzustand detektiert wird, zu sperren, wenn der Motor unterhalb einer Höhe von 3048m läuft.

12. Steuersystem für einen Turbowellenmotor, umfassend:
a) Mittel (28, 41a, b, 43a, b) zum Liefern eines minimalen Kraftstoffflusses zu dem Motor, wenn in einem ersten Betriebsbereich ein Überdrehzahlzustand detektiert wird; und
b) Mittel (32, 41 a, b, 43a, b) zum Abschalten des Kraftstoffflusses zu dem Motor, wenn in einem zweiten Betriebsbereich ein Überdrehzahlzustand erfasst wird, vorausgesetzt, dass der Überdrehzahlzustand entlang zwei unterschiedlichen Motordrehzahlsignalwegen (41 a, b, 43a, b), die einen derivativen Weg und einen nicht-derivativen Weg enthalten, detektiert wird.

13. Steuersystem nach Anspruch 12, worin im ersten Betriebsbereich der Motor auf relativ geringer Höhe läuft und im zweiten Betriebsbereich der Motor auf relativ großer Höhe läuft.

14. Steuersystem nach Anspruch 13, worin die relativ geringe Höhe 0 bis 3048m über dem Meeresspiegel enthält und die relativ große Höhe 3048m über dem Meeresspiegel überschreitet.

15. Steuersystem nach Anspruch 12, worin der derivative Weg (41 a, 43a) derivative und proportionale Steuerlogik enthält und der nicht-derivative Weg (43b) proportionale Logik enthält.

16. Steuersystem nach Anspruch 12, das ferner einen Hardwaresignallspeicher (40) aufweist, dem eine Rücksetzlogik zugeordnet ist.

17. Steuersystem nach Anspruch 12, das ferner Software-Testschnittstellen (50, 52) aufweist, um die Leistungsfähigkeit des Steuersystems zu testen.

18. Steuersystem nach Anspruch 12, worin das Mittel (28, 41 a, b, 43a, b) zu Liefern eines gewünschten minimalen Kraftstoffflusses zu dem Motor, wenn ein Überdrehzahlzustand detektiert wird, ein erstes Magnetventil (28) enthält, und das Mittel (32, 41a, b, 43a, b) zum Abschalten des Kraftstoffflusses zu dem Motor, wenn ein Überdrehzahlzustand erfasst wird, ein zweites Magnetventil (42) enthält.

19. Steuersystem nach Anspruch 12, worin ein Überdrehzahlzustand basierend auf einem Antriebsturbinendrehzahlsignal und/oder einem Gasgeneratordrehzahlsignal und/oder einem Hauptrotordrehzahlsignal detektiert wird.

20. Steuersystem nach Anspruch 12, worin das System ein Doppelkanalsystem mit einem Zwischenkanalkommunikationsmittel ist, um sicherzustellen, dass ein Fehler in einem Kanal des Systems das Steuersystem nicht abschaltet.

21. Verfahren zur Überdrehzahlbegrenzung eines Turbowellenmotors, welches die Schritte umfasst:
a) Messen zumindest eines Motordrehzahlparameters;
b) Sensieren der Höhe, auf der der Motor läuft;
c) Bestimmen, ob ein Überdrehzahlzustand vorhanden ist, basierend auf dem gemessenen Drehzahlparameter, unter Verwendung eines Steuersystems, das einen ersten Logikweg (41 a, 43a) mit derivativer und nicht-derivativer Steuerlogik sowie eine zweiten Logikweg (43b) mit nicht-derivativer Logik enthält;
d) Liefern eines gewünschten minimalen Kraftstoffflusses zu dem Motor, wenn durch das Motorsteuersystem ein Überdrehzahlzustand detektiert wird, wenn der Motor in einem ersten Höhenbereich läuft; und
e) Abschalten des Kraftstoffflusses zu dem Motor, wenn durch das Motorsteuersystem ein Überdrehzahlzustand detektiert wird und der Motor in einem zweiten Betriebsbereich läuft.

## Revendications

1. Système de commande pour un turbomoteur comprenant :
a) des moyens (28, 41a, b, 43a, b) pour fournir un débit de carburant minimum désiré au moteur lorsqu'une condition de survitesse est détectée et lorsque le moteur fonctionne dans une première plage de fonctionnement ; et
b) des moyens (32, 41 a, b, 43a, b) pour fermer le débit de carburant au moteur lorsqu'une condition de survitesse est détectée et le moteur fonctionne dans une seconde plage de fonctionnement.

2. Système de commande selon la revendication 1, dans lequel dans la première plage de fonctionnement, le moteur fonctionne à une altitude relativement basse et dans la seconde plage de fonctionnement, le moteur fonctionne à une altitude relativement haute.

3. Système de commande selon la revendication 2, dans lequel l'altitude relativement basse est comprise entre 0 et 3 048 m au-dessus du niveau de la mer et l'altitude relativement haute dépasse 3 048 m au-dessus du niveau de la mer.

4. Système de commande selon la revendication 1, dans lequel une condition de survitesse est détectée le long de deux chemins de logique de commande différents, un premier chemin de logique (41a, 43a) qui comporte une logique de commande dérivée et non dérivée et un second chemin de logique (43b) qui comporte une logique non dérivée.

5. Système de commande selon la revendication 4, dans lequel la logique non dérivée comporte une logique proportionnelle.

6. Système de commande selon la revendication 1, comprenant en outre un verrouillage matériel (40) ayant une logique de réinitialisation associée.

7. Système de commande selon la revendication 1, comprenant en outre des interfaces de test logiciel (50, 52) pour tester la performance du système de commande.

8. Système de commande selon la revendication 1, dans lequel les moyens (28, 41 a, b, 43a, b) pour fournir un débit de carburant minimum désiré au moteur lorsqu'une condition de survitesse est détectée, comportent une première électrovalve (28) et les moyens (32, 41 a, b, 43a, b) pour fermer le débit de carburant au moteur lorsqu'une condition de survitesse est détectée, comportent une seconde électrovalve (32).

9. Système de commande selon la revendication 1, dans lequel une condition de survitesse est détectée sur la base d'au moins un signal de vitesse de turbine de puissance, un signal de vitesse de générateur de gaz et un signal de vitesse de rotor principal.

10. Système de commande selon la revendication 1, dans lequel le système est un système à deux canaux ayant des moyens de communication intercanaux pour garantir qu'un défaut dans un canal du système n'arrêtera pas le système de commande.

11. Système de commande selon la revendication 1, comprenant en outre des moyens pour mettre hors service les moyens de fermeture du débit de carburant au moteur lorsqu'une condition de survitesse est détectée lorsque le moteur fonctionne au-dessous d'une altitude de 3 048 m.

12. Système de commande pour un turbomoteur comprenant :
a) des moyens (28, 41 a, b, 43a, b) pour fournir un débit de carburant minimum au moteur lorsqu'une condition de survitesse est détectée dans une première plage de fonctionnement ; et
b) des moyens (32, 41a, b, 43a, b) pour fermer le débit de carburant au moteur lorsqu'une condition de survitesse est détectée dans une seconde plage de fonctionnement, à condition que la condition de survitesse soit détectée le long de deux chemins de signal de vitesse de moteur différents (41 a, b, 43a, b) comportant un chemin dérivé et un chemin non dérivé.

13. Système de commande selon la revendication 12, dans lequel dans la première plage de fonctionnement, le moteur fonctionne à une altitude relativement basse et dans la seconde plage de fonctionnement, le moteur fonctionne à une altitude relativement haute.

14. Système de commande selon la revendication 13, dans lequel l'altitude relativement basse est comprise entre 0 et 3 048 m au-dessus du niveau de la mer et l'altitude relativement haute dépasse 3 048 m au-dessus du niveau de la mer.

15. Système de commande selon la revendication 12, dans lequel le chemin dérivé (41a, 43a) comporte une logique de commande dérivée et proportionnelle et le chemin non dérivé (43b) comporte une logique proportionnelle.

16. Système de commande selon la revendication 12, comprenant en outre un verrouillage matériel (40) ayant une logique de réinitialisation associée.

17. Système de commande selon la revendication 12, comprenant en outre des interfaces de test logiciel (50, 52) pour tester la performance du système de commande.

18. Système de commande selon la revendication 12, dans lequel les moyens (28, 41 a, b, 43a, b) pour fournir un débit de carburant minimum désiré au moteur lorsqu'une condition de survitesse est détectée, comportent une première électrovalve (28) et les moyens (32, 41 a, b, 43a, b) pour fermer le débit de carburant au moteur lorsqu'une condition de survitesse est détectée, comportent une seconde électrovalve (32).

19. Système de commande selon la revendication 12, dans lequel une condition de survitesse est détectée sur la base d'au moins un signal de vitesse de turbine de puissance, un signal de vitesse de générateur de gaz et un signal de vitesse de rotor principal.

20. Système de commande selon la revendication 12, dans lequel le système est un système à deux canaux ayant des moyens de communication intercanaux pour garantir qu'un défaut dans un canal du système n'arrêtera pas le système de commande.

21. Procédé de limitation d'une survitesse de turbomoteur comprenant les étapes suivantes consistant à :
a) mesurer au moins un paramètre de vitesse de moteur ;
b) détecter l'altitude à laquelle le moteur fonctionne ;
c) déterminer si une condition de survitesse existe sur la base du paramètre de vitesse mesuré en utilisant un système de commande qui comporte un premier chemin de logique (41a, 43a) ayant une logique de commande dérivée et non dérivée et un second chemin de logique (43b) ayant une logique non dérivée ;
d) fournir un débit de carburant minimum désiré au moteur lorsqu'une condition de survitesse est détectée par le système de commande de moteur lorsque le moteur fonctionne dans une première plage d'altitude ; et
e) fermer le débit de carburant au moteur lorsqu'une condition de survitesse est détectée par le système de commande de moteur et le moteur fonctionne dans une seconde plage de fonctionnement.
